# EUROPEAN PATENT SPECIFICATION

(11) **EP 1 600 372 B1**
(45) Date of publication and mention of the grant of the patent: **29.07.2015**
(21) Application number: 05253315.5
(22) Date of filing: 27.05.2005
(51) Int. Cl.: F03C 1/06, B64C 13/40

(54) **Hydraulic motors**
Hydraulische Motoren
Moteurs hydrauliques

(30) Priority: 28.05.2004 GB 0412024; 16.06.2004 GB 0413487
(43) Date of publication of application: 30.11.2005
(73) Proprietor: Eaton Limited, Manchester M28 3ET (GB)
(72) Inventor: Riley, Steven, Hindhead GU26 6DS (GB); Bowers, Joanne Margaret, Bitterne Southampton SO19 7NQ (GB)
(74) Representative: Tabeling, Marcella M.J.

(56) References cited:
- EP-A1- 0 691 474
- DE-A1- 1 453 689
- GB-A- 915 790
- GB-A- 2 117 063
- US-A- 2 757 612
- US-A- 5 836 160

## Description

### Field of the Invention

The invention relates to variable displacement bi-directional hydraulic motors and particularly, but not exclusively, to such motors for use in aerospace applications.

### Background to the Invention

Variable displacement bi-directional motors are used for aerospace, marine and defence applications. Typical aerospace applications include actuation of aircraft flap/slat systems. Military vehicle and marine applications include azimuth and elevation servo drives for turret drive systems and missile launchers.

A variable displacement bi-directional hydraulic motor (see e.g. GB 2117063 A) comprises a plurality of pistons housed in respective bores in a cylinder block. Fluid is sequentially fed into the cylinder block bores to cause the pistons to reciprocate. The pistons each have an end that projects from the cylinder block and is provided with a shoe through which the pistons press against an inclined bearing surface supported by a yoke. The cylinder block is connected with a drive shaft. As the pistons reciprocate within the cylinder block bores, they cause the cylinder block, and so the drive shaft, to rotate. The inclination of the bearing surface can be varied by tilting the yoke so as to vary the displacement. Furthermore, the yoke can be moved over centre so as to change the direction of rotation of the motor, without the need to change the sense of the low and high pressure ports that communicate with the cylinder ports.

It is an object of the invention to provide improved variable displacement bi-directional hydraulic motors and/or at least provide an alternative to existing designs. DE 1453689 describes a hydraulic axial piston machine.

### Summary of the Invention

According to the invention there is provided the variable displacement bi-directional hydraulic motor of claim 1. The inclination of the bearing surface with respect to the plane of the swash angle provides decompression and precompression of the fluid as the cylinder bores move between the intake and exhaust phases, which may reduce hydraulic pulsations created as the bores are exposed to inlet and exhaust pressure.

The invention also includes a hydraulic control system in an aircraft provided with a variable displacement bi-directional hydraulic motor as defined in claim 1.

### Brief Description of the Drawings

In order that the invention may be well understood, an embodiment thereof, which is given by way of example only, will now be described, with reference to the drawings, in which:
Figure 1 is a sectional view of a variable displacement bi-directional hydraulic motor;
Figure 2 is a perspective view of a cylinder block and piston sub-assembly of the hydraulic motor of Figure 1;
Figure 3 is a scrap section showing a part of the yoke and piston/shoe assembly of the motor of Figure 1;
Figure 4 is a schematic view of a valve port arrangement for feeding the cylinder block shown in Figure 2;
Figure 5 is an enlarged scrap cross-section of the yoke of Figure 3; and
Figure 6 is a schematic representation of the bearing surface of the yoke.

### Detailed Description of a Preferred Embodiment

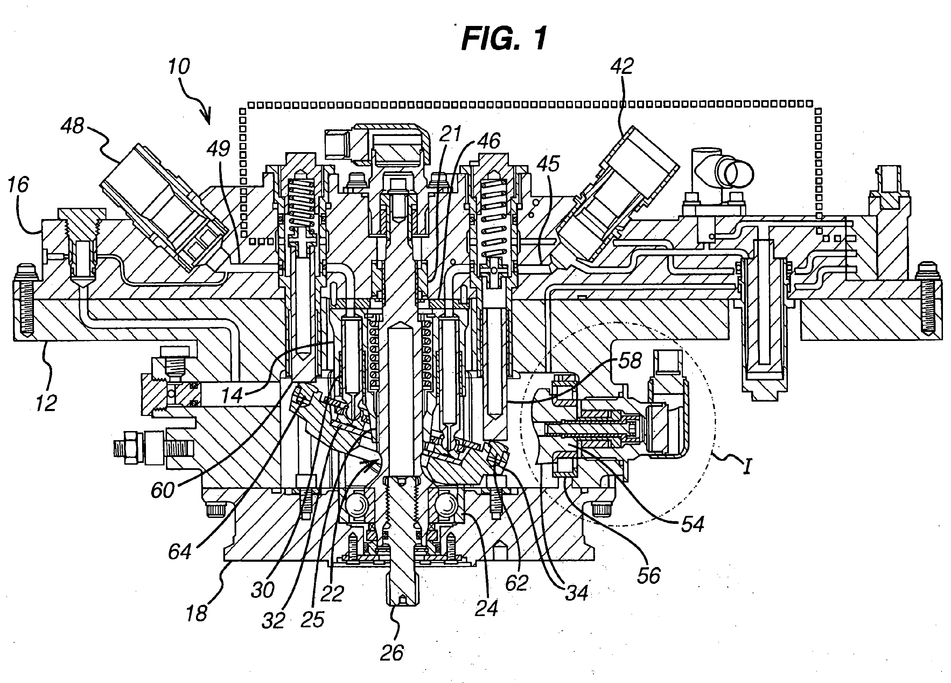

Figure 1 is a cross-sectional view of a variable displacement bi-directional hydraulic motor 10. It is to be noted that the segment of the drawing marked I is rotated 90° with respect to the remainder of the drawing.

The variable displacement bi-directional hydraulic motor 10 (hereinafter "over centre motor") comprises a motor casing 12 that has a hollow central portion housing a rotatably mounted cylinder block 14. One end of the motor casing 12 is closed by a valve block, or valve plate, 16 and the other end is closed by a face plate 18.

The cylinder block 14 has an axially extending throughbore 20. A drive shaft 22 extends through the throughbore 20 and has one end rotatably supported in a radial bearing 21 mounted in the valve block 16 and the other end rotatably supported by a radial-thrust rolling bearing 24 that is mounted in the face plate 18. The drive shaft 22 is coupled to the cylinder block 14 by any suitable means, such as splines 25. A coupling shaft 26 is fixed to the end of the drive shaft that is supported in the face plate 18 and projects beyond the face plate for coupling to a device to be driven by the motor 10. Suitable seals and/or packing are variously provided between the motor casing 12, valve block 16, face plate 18, drive shaft 22 and coupling shaft 26 where required in order to retain hydraulic fluid within the motor 10.

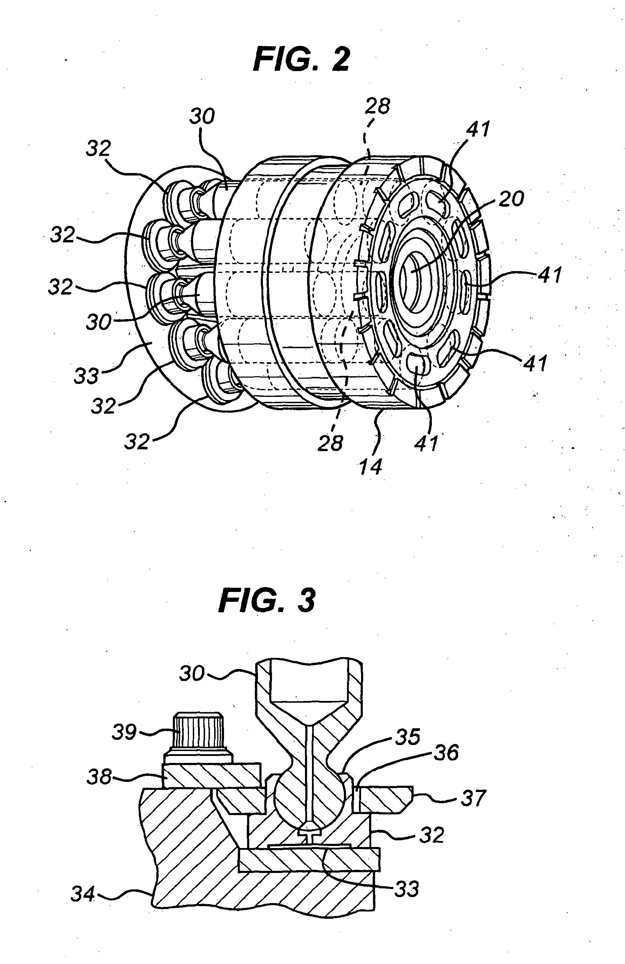

Referring again to Figure 2, the cylinder block 14 defines a plurality of cylinder bores 28 that extend parallel to the axis of rotation of the cylinder block. The cylinder bores 28 are on a common pitch circle and each houses a hollow piston 30. Each piston 30 is able to reciprocate in its cylinder bore 28 and has an end that projects from the cylinder block. As best seen in Figure 3, the projecting ends of the pistons define a ball which is fitted into a ball socket of a respective piston shoe 32. The piston shoes 32 have planar engagement faces that slidably engage a bearing surface 33 provided on a yoke 34 (Figures 1, 3 and 5).

Referring to Figure 3, the piston shoes 32 each have a relatively narrow neck 35 that is received in respective apertures 36 provided in a shoe hold down plate 37. Axial retention of the shoe hold down plate 37 is provided by a retainer ring 38 that is secured to the yoke 34 by screws 39. The face of the retainer ring 38 that engages the shoe hold down plate 37 is provided with a bearing surface, which may be in the form of a bronze facing.

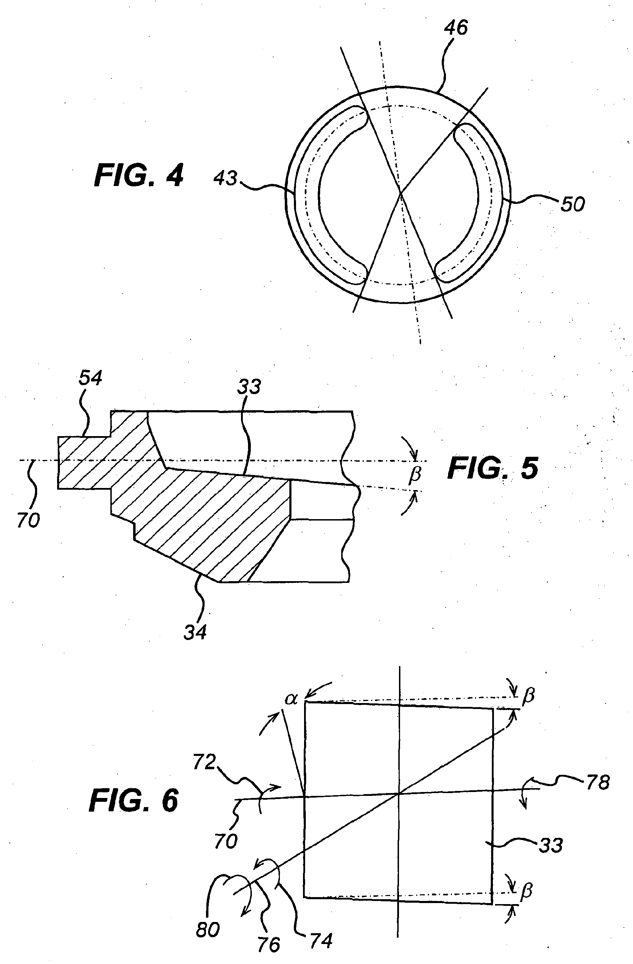

Referring to Figure 2, the rear end of the cylinder block 14 is provided with respective ports 41 for the cylinder bores 28. Hydraulic fluid passes into and out of the cylinder bores via the cylinder block ports 41 to provide reciprocating movement of the pistons 30. The supply of hydraulic fluid to and from the cylinder block ports 41 is through the valve block 16. The valve block is provided with an inlet, or high pressure, port 42 for connection with a source of pressurised hydraulic fluid. The inlet port 42 is connected with an arcuate slot 43 (Figure 4) by an inlet passage 45 defined in the valve block. The arcuate, or kidney, slot 43 is defined by a wafer plate 46 (Figure 1), which is positioned between the valve block 16 and the cylinder block 14. The kidney slot 43 may alternatively be defined in the valve block so that a wafer plate 46 is not needed. The provision of a wafer plate permits greater freedom in the selection of valve block material, which allows for cost and weight savings. For example, where a wafer plate is used, the plate can be made of steel allowing the valve block to be made of aluminium.

The valve block 16 also has an exhaust port 48 and defines an exhaust passage 49 that connects the exhaust port with a second arcuate, kidney, slot 50 defined by the wafer plate 46. The wafer plate 46 is arranged such that as the cylinder block 14 rotates, the cylinder block bores 41 sweep over the kidney slots 43, 50 in such a way that pressurised hydraulic fluid is sequentially admitted to the cylinder block bores 28 via the high pressure kidney slot 43 and then exhausted via the low pressure kidney slot 50. The kidney slots 43, 50 may be symmetrically or asymmetrically positioned about the top and bottom dead centre positions of the cylinder block 14 to provide optimised biased timing. This provides higher efficiency and reduced hydraulic pulsations.

The yoke 34 is a generally annular member with a generally centrally disposed through-hole, which receives the drive shaft 22. The yoke 34 has oppositely disposed pintles 54, one of which is shown in Figure 1. The pintles 54 are supported by respective pintle bearings 56 (preferably cylindrical rolling bearings) supported in the motor casing 12. As described in more detail below, the mounting of the yoke 34 in the pintle bearings 56 permits pivoting of the yoke about a pivot axis 70 (Figures 5 and 6) defined by the pintles 54 to control the displacement of the motor and its direction of rotation. In the embodiment, the pivot axis is at right angles to the axis of rotation 76 of the cylinder block 14.

The over centre motor 10 has two control pistons 58, 60 that act on respective buttons 62, 64 provided on the yoke 34. The buttons 62,64 are positioned symmetrically about the yoke pivot, or tilting, axis 70. Pivoting of the yoke 34 about its pivot axis 70 is controlled by the selective supply and exhaust of hydraulic fluid acting on the control pistons 58,60.

Referring to Figures 5 and 6, the bearing surface 33 is a plane surface. In Figure 6, it is represented schematically as a rectangular surface, although it is in fact an annular surface. The pivot mounting of the yoke in the pintle bearings 56 allows the bearing surface to be pivotted about the pivot axis 70. The amount of pivoting is controlled by the control pistons 58, 60. From the neutral position illustrated in Figure 6, if the bearing surface 33 is pivotted in the direction indicated by arrow 72 the drive shaft 22 will rotate in a first direction 74 with respect to the axis of rotation 76 and if the bearing surface is pivotted in the direction indicated by arrow 78, the drive shaft will rotate in a second, opposite direction 80. The amount of pivoting, or degree of inclination, of the bearing surface with respect to the tilt axis 70 determines the swash, or ramp, angle α of the bearing surface. Varying the swash angle α varies the displacement of the motor, whereas the direction of inclination with respect to the neutral position determines the direction of the motor.

In addition to being inclined with respect to the tilt axis by the variable angle α, the bearing surface 33 is inclined at a fixed cant angle β in a plane perpendicular to the plane of the swash angle α. Thus, the bearing surface is inclined in two mutually perpendicular directions, the amount and direction of inclination being fixed in one direction and variable in the other. The cant angle β is shown somewhat exaggerated in the drawings for ease of recognition.

In use, as each piston 30 reaches the region of its top dead centre position (minimum cylinder volume), it is subjected to hydraulic fluid at inlet pressure that is supplied from the inlet passage 45 via the high pressure kidney slot 43 and its cylinder block port 41. The hydraulic fluid drives the piston down its cylinder bore 28. The axial force of the piston is applied through the piston shoe 32 to the bearing surface 33. Due to the "down ramp" effect, the piston exerts a tangential force, which creates a torque acting on the cylinder block 14. The torque is transferred to the drive shaft 22 through the splines 25. The sum of the individual piston torques is the total torque developed by the motor.

As each piston reaches its bottom dead centre position (maximum cylinder volume), its cylinder block port 41 opens to the exhaust passage 49 via the low pressure kidney slot 50. The piston shoe 32 now moves "up ramp" and the piston forces the hydraulic fluid in the cylinder bore 28 into the exhaust passage 49. When the piston is back in the region of top dead centre, it is ready for the next power stroke. During the exhaust stroke, the piston shoes 32 are maintained in engagement with the bearing surface by the shoe hold down place 37 and the retainer ring 38.

The introduction of the cant angle β allows correct precompression of the hydraulic fluid when passing through the top dead centre position. Correct precompression ensures that the volume of fluid contained in the cylinder bore is at a pressure close to that of the supply as it enters the high pressure kidney slot 43. Equalising these pressures before the cylinder bore opens, reduces the pressure pulsation that would otherwise occur. The introduction of the cant angle β allows correct decompression of the hydraulic fluid when passing through the bottom dead centre positions. Correct decompression ensures that the volume of fluid contained in the cylinder bore is at a pressure close to that of the return as it enters the low pressure kidney slot 50. Equalising these pressures before the cylinder bore opens, reduces the pressure pulsations that would otherwise occur.

By reducing pressure pulsations in the low and high pressure ports 42, 48, both airborne and structure borne noise resulting from operation of the motor are reduced.

As will be appreciated, the inclination of the bearing surface 33 determined by the ramp angle α provides for a change of cylinder volume as the pistons move up and down ramp. By providing a second direction of inclination transverse, and preferably perpendicular, to the first direction of inclination, a change of volume of the cylinder bores is provided as the piston passes between the two kidney slots 43, 50. By selecting a suitable cant angle β, the decompression and precompression of the fluid can be optimised to the common operating mode of the motor. The optimum cant angle β will depend on the system pressure, speed of rotation, swash angle and fluid compressibility. It is envisaged that the cant angle β will typically be a fixed angle in the range 1° to 5° and more preferably the angle might be fixed at 3°. Surprisingly, the provision of the cant angle β provides the correct decompression and precompression of the fluid, regardless of the direction of rotation of the motor.

In the embodiment illustrated by Figure 5, the cant angle β is machined into the yoke 34. However, it will be understood that as an alternative, an annular ring having a wedge-shaped section defining the cant angle could be fitted to the yoke.

It is envisaged that the over centre motor 10 will be used in aircraft hydraulic systems, where the reduction in the airborne and structure borne noise obtained by the introduction of the cant angle should prove advantageous.

The embodiments provide an improved variable displacement bi-directional hydraulic motor, with reduced hydraulic pressure pulsations. Reducing pulsations has a benefit on fatigue life and noise levels. In particular, positioning of the kidney slots with respect to the top and bottom dead centre positions in conjunction with the selection of the cant angle β can provide optimised biassed turning together with decompression and precompression of the fluid in the cylinder bores to provide high efficiency and reduced hydraulic pulsations. The inventors have made the surprising discovery that uniquely the cant angle can be incorporated in bi-directional motors by the existence of dedicated high and low pressure ports. It would not be possible where the sense (inlet/exhaust) of the ports changes when changing the sense of rotation.

The over centre motor 10 may include features of the Vickers® RMV3-160-1 Intelligent Motor™ as set out in Product News PN 640-1 8/99, published in 1999 by the Eaton Corporation.

## Claims

1. A variable displacement bi-directional hydraulic motor (10) comprising a rotatable member (14) that has an axis of rotation (76) and defines a plurality of cylinder bores (28), respective pistons (30) received in said bores (28) and a part (34) defining a bearing surface (33) that is engaged by respective bearing members (32) carried at an end of the pistons (30) that project from the cylinder bores (28), said part (34) being mounted for pivoting movement about a pivot axis (70) to allow a swash angle (α) of said bearing surface (33) to be varied, whereby the displacement of the motor (10) can be controllably varied and the direction of rotation of the motor can be changed and the arrangement being such that said bearing surface (33) is inclined at an angle (β) in a plane perpendicular to the plane of said swash angle (α).

2. A motor (10) as claimed in claim 1, in which the amount of the incline in the plane perpendicular to the plane of the swash angle (α) is fixed.

3. A motor (10) as claimed in claim 2, wherein said fixed angle (β) is substantially in the range 1° to 5°.

4. A motor (10) as claimed in claim 32, wherein said fixed angle (β) is substantially 3°.

5. A motor as claimed in any of claims 2 to 4 wherein the part (33) is a yoke.

6. A motor (10) as claimed in any of claims 2 to 5, wherein said fixed angle (P) is provided by forming said bearing surface (33) on said yoke.

7. A variable displacement bi-directional hydraulic motor (10) as claimed in any preceding claim, said motor (10) comprising:
a motor shaft (22) rotatably mounted in a housing (12);
wherein said rotatable member (14) is a drum fixed on said motor shaft (22), said plurality of bores (28) extending parallel to said housing (12) and having a first opening at a first end thereof and a second opening at a second end thereof;
a dedicated supply passage (45) for supplying hydraulic fluid and a dedicated exhaust passage (49) for exhausting hydraulic fluid, said passages (45, 49) being arranged to sequentially communicate with said first openings of said bores when, in use, said motor shaft rotates, whereby hydraulic fluid is supplied to and exhausted from said bores;
respective pistons housed in said bores and each having a leading end projecting from the second opening of the respective bore;
respective bearing members fixed on said leading ends of said pistons so as to be movable relative thereto; and
a mechanism to allow a control system to act on said part defining a bearing surface to cause pivoting movement thereof such that said swash angle is varied.

8. A hydraulic control system in an aircraft comprising a variable displacement bi-directional hydraulic motor as claimed in any one of the preceding claims.

## Patentansprüche

1. Variabler, bidirektionaler, hydraulischer Verstellmotor (10) mit einem drehbaren Element (14), welches eine Drehachse (76) hat und mehrere Zylinderbohrungen (28) aufweist, entsprechenden Kolben (30), die in den Bohrungen (28) aufgenommen sind, und einem Teil (34), das eine Lageroberfläche (33) aufweist, in welche entsprechende Lagerelemente (32) eingreifen, die an einem Ende der Kolben (30) vorgesehen sind, die aus den Zylinderbohrungen (28) hervorstehen, wobei das Teil (24) für eine Drehbewegung um eine Drehachse (70) angebracht ist, um es zu ermöglichen, einen Schwenkwinkel (α) der Lageroberfläche (30) zu variieren, wobei das Verstellen des Motors (10) steuerbar variiert werden kann, und wobei die Drehrichtung des Motors geändert werden kann, und wobei die Anordnung derart ist, dass die Lageroberfläche (33) um einen Winkel (β) zu einer Ebene geneigt ist, die rechtwinklig zu der Ebene des Schwenkwinkels (α) ist.

2. Motor (10) nach Anspruch 1, wobei der Betrag der Neigung zu der Ebene, die rechtwinklig zu der Ebene des Schwenkwinkels (α) ist, fest vorgegeben ist.

3. Motor (10) nach Anspruch 2, wobei der fest vorgegebene Winkel (β) im Wesentlichen in dem Bereich von 1 ° bis 5° ist.

4. Motor (10) nach Anspruch 3, wobei der fest vorgegebene Winkel (β) im Wesentlichen 3° ist.

5. Motor nach einem der Ansprüche 2 bis 4, wobei das Teil (33) ein Joch ist.

6. Motor (10) nach einem der Ansprüche 2 bis 5, wobei der feststehende Winkel (β) durch Bilden der Lageroberfläche (33) an dem Joch vorgesehen ist.

7. Variabler, bidirektionaler, hydraulischer Verstellmotor (10) nach einem der vorhergehenden Ansprüche, wobei der Motor (10) aufweist:
einen Motorschaft (22), der drehbar in einem Gehäuse (12) angebracht ist;
wobei das drehbare Element (14) eine Trommel ist, die an dem Motorschaft (22) befestigt ist, wobei die mehreren Löcher (22) sich parallel zu dem Gehäuse (12) erstrecken und eine erste Öffnung bei dessen erstem Ende und eine zweite Öffnung bei dessen zweitem Ende haben;
einen zugehörigen Zufuhrdurchgang (45) zum Zuführen von hydraulischer Flüssigkeit und einen zugehörigen Auslassdurchgang (49) zum Auslassen von hydraulischer Flüssigkeit, wobei die Durchgänge (45; 49) so angeordnet sind, dass sie sequentiell mit den ersten Öffnungen der Bohrungen in Verbindung stehen, wenn sich der Motorschaft im Betrieb dreht;
wobei hydraulische Flüssigkeit zugeführt zu und abgelassen wird von den Bohrungen;
wobei die Kolben in den Bohrungen aufgenommen sind und jeweils ein vorderes Ende haben, das aus der zweiten Öffnung der entsprechenden Bohrung hervorsteht;
wobei die entsprechenden Lagerelemente so an den vorderen Enden der Kolben befestigt sind, dass sie relativ dazu beweglich sind; und
einen Mechanismus, um es einem Steuerungssystem zu erlauben, auf das Teil einzuwirken, welches eine Lageroberfläche aufweist, um deren Drehbewegung derart zu veranlassen, dass sich der Schwenkwinkel ändert.

8. Hydraulisches Steuerungssystem in einem Flugzeug mit einem variablen, bidirektionalen, hydraulischen Verstellmotor nach einem der vorhergehenden Ansprüche.

## Revendications

1. Moteur hydraulique bidirectionnel à déplacement variable (10) comprenant un élément rotatif (14) qui a un axe de rotation (76) et définit une pluralité d'alésages cylindriques (28), des pistons respectifs (30) reçus dans lesdits alésages (28) et une partie (34) définissant une surface de palier (33) qui est engagée par des éléments de palier respectifs (32) portés à une extrémité des pistons (30) qui font saillie des alésages cylindriques (28), ladite partie (34) étant montée pour effectuer un mouvement pivotant autour d'un axe pivot (70) afin de pouvoir modifier un angle de nutation (α) de ladite surface de palier (33), dans lequel le déplacement du moteur (10) peut être modifié de manière contrôlée et le sens de rotation du moteur peut être changé, l'aménagement étant tel que ladite surface de palier (33) soit inclinée sous un angle (β) dans un plan perpendiculaire au plan dudit angle de nutation (α).

2. Moteur (10) selon la revendication 1, dans lequel le degré d'inclinaison dans le plan perpendiculaire au plan de l'angle de nutation (α) est fixe.

3. Moteur (10) selon la revendication 2, dans lequel ledit angle fixe (β) se situe sensiblement dans la plage de 1 à 5°.

4. Moteur (10) selon la revendication 32, dans lequel ledit angle fixe (β) est sensiblement de 3°.

5. Moteur selon l'une quelconque des revendications 2 à 4, dans lequel la partie (33) est un arceau.

6. Moteur (10) selon l'une quelconque des revendications 2 à 5, dans lequel ledit angle fixe (β) est fourni en formant ladite surface de palier (33) sur ledit arceau.

7. Moteur hydraulique bidirectionnel à déplacement variable (10) selon l'une quelconque des revendications précédentes, ledit moteur (10) comprenant :
un arbre de moteur (22) monté à rotation dans un boîtier (12) ;
dans lequel ledit élément rotatif (14) est un tambour fixé sur ledit arbre de moteur (22), ladite pluralité d'alésages (28) s'étendant parallèlement audit boîtier (12) et ayant une première ouverture à une première de ses extrémités et une seconde ouverture à sa seconde extrémité ;
un passage d'alimentation dédié (45) pour fournir du fluide hydraulique et un passage d'échappement dédié (49) pour évacuer le fluide hydraulique, lesdits passages (45, 49) étant ménagés pour communiquer en séquence avec lesdites premières ouvertures desdits alésages lorsque, en service, ledit arbre de moteur tourne, dans lequel du fluide hydraulique est fourni auxdits alésages et en est évacué ;
des pistons respectifs logés dans lesdits alésages et chacun ayant une extrémité d'attaque dépassant de la seconde ouverture de l'alésage respectif ;
des éléments de palier respectifs fixés sur lesdites extrémités d'attaque desdits pistons de manière à pouvoir se déplacer par rapport à ceux-ci ;
un mécanisme pour permettre à un système de commande d'agir sur ladite partie définissant une surface de palier pour provoquer un mouvement pivotant de celle-ci de sorte que ledit angle de nutation soit modifié.

8. Système de commande hydraulique dans un aéronef comprenant un moteur hydraulique bidirectionnel à déplacement variable selon l'une quelconque des revendications précédentes.
